# EUROPÄISCHE PATENTSCHRIFT

(11) **EP 3 324 218 B1**
(45) Veröffentlichungstag und Bekanntmachung des Hinweises auf die Patenterteilung: **28.08.2019**
(21) Anmeldenummer: 17196193.1
(22) Anmeldetag: 12.10.2017
(51) Int. Cl.: G01V 8/20

(54) **MEHRSTRAHLLICHTSCHRANKE**
MULTI-BEAM LIGHT BARRIER
CELLULE DE DÉTECTION À MULTIFAISCEAU

(30) Priorität: 15.11.2016 DE 102016121913
(43) Veröffentlichungstag der Anmeldung: 23.05.2018
(73) Patentinhaber: Sick AG, 79183 Waldkirch (DE)
(72) Erfinder: SCHöllhorn, Wolfgang, 68600 Biesheim (FR); HENKEL, Olaf, 79276 Reute (DE)

(56) Entgegenhaltungen:
- WO-A1-2011/110256
- DE-A1-102004 022 408
- DE-U1-202005 010 358
- DE-U1-202014 101 761
- GB-A- 2 495 141
- JP-A- 2015 233 006
- US-A- 4 201 910

## Beschreibung

Die vorliegende Erfindung betrifft eine Mehrstrahllichtschranke gemäß dem Oberbegriff von Anspruch 1 und eine Umlenkeinheit gemäß dem Oberbegriff von Anspruch 7.

Mehrstrahllichtschranken, insbesondere Mehrstrahllichtschranken, beispielsweise mit getrennter Sendeeinheit und Empfangseinheit müssen für industrielle Anwendungen hohe Reichweiten aufweisen. Beispielsweise beträgt die zugesicherte Reichweite der Mehrstrahllichtschranken M4000 der Anmelderin 70 m.

Die Reichweite wird wesentlich durch die Brennweite und die Öffnung einer verwendeten Kunststoffoptik bestimmt. Die Reichweite steigt linear mit der Brennweite mit der Steigung 1. Hohe Brennweiten und große Öffnungen führen zu hohen Reichweiten, andererseits steigt aber auch der benötigte Bauraum. Dies bedeutet, dass mit hohen Reichweiten auch die Gehäusegröße zunimmt.

Die GB 2495141 A offenbart einen Sensor für ein Hinderniserfassungssystem mit einem Gehäuse, das eine Anordnung von Strahlungsemittern oder Strahlungsempfängern und eine Einrichtung zum Umlenken der emittierten Strahlung um einen vordefinierten Winkel aufweist.

Die US 4 201 910 A offenbart ein Photosensorsystem mit einem Gehäuse, in dem ein Primärkanal definiert ist, und einen Sekundärkanal, der den Primärkanal im Wesentlichen unter einem rechten Winkel schneidet. Eine Lichtquelle ist in dem sekundären Durchgang angeordnet, um Licht zu dem Schnittpunkt der Durchgänge zu lenken, und eine Strahlteilerplatte ist an dem Schnittpunkt in einem Winkel von etwa 45° angeordnet. An diesem Ende des Primärkanals ist eine Linse angeordnet, um die Lichtstrahlen zu kollimieren und sie aus dem Gehäuse herauszuführen. Eine Seite der Strahlteilerplatte enthält eine reflektierende Oberfläche, um darauf auftreffendes Licht zu reflektieren, und eine Öffnung, um den Durchgang von Licht zu ermöglichen. Wenn von der Linse nach außen gerichtetes Licht auf einen Retroreflektor trifft, wird ein Teil des Lichts durch die Linse und durch die Öffnung in der Strahlteilerplatte zurück zum anderen Ende des primären Kanals reflektiert.

Die JP 2015233006 A offenbart ein Mehrstrahl-Detektionssystem, das in der Lage ist, den Durchgang eines Objekts mit der begrenzten Anzahl von Kontrolllichtquellen zur Verwendung zuverlässig zu erkennen. In dem Erfassungssystem, das einen Projektorteil und einen Lichtempfängerteil umfasst, umfasst der Projektorteil mindestens eine Lichtquelle, die einen Hauptlichtstrahl erzeugt. Ein erstes Element, das eine Reflexionszone enthält ist angeordnet zum Erzeugen eines ersten reflektierten Lichtstrahls von einem ersten Teil des Hauptlichtstrahls und weist einen Öffnungsteil auf, um einen zweiten Teil des Hauptlichts durchzulassen.

Die WO 2011/110256 A1 offenbart einen Lichtvorhang zur Erfassung von Objekten in einem Überwachungsbereich, umfassend eine Sender-Empfänger-Einheit an einem Rand des Überwachungsbereichs und einen Reflektor an einem zweiten Rand des Überwachungsbereichs, wobei die Sender-Empfänger-Einheit eine Anordnung von Sender-Empfänger-Paaren mit jeweils einem Sendelichtstrahlen emittierenden Sender und Empfangslichtstrahlen empfangenden Empfänger aufweist, wobei bei freiem Überwachungsbereich die Sendelichtstrahlen jeden Senders auf den Reflektor treffen und von dort als Empfangslichtstrahlen auf den zugeordneten Empfänger geführt sind, und wobei bei einem Objekteingriff im Überwachungsbereich der Strahlengang der Sendelichtstrahlen und Empfangslichtstrahlen wenigstens eines Sender-Empfänger-Paares zumindest teilweise unterbrochen ist, wobei die Sendelichtstrahlen und Empfangslichtstrahlen jedes Sender-Empfänger-Paares koaxial im Überwachungsbereich verlaufen.

Die DE 10 2004 022 408 A1 offenbart einen optischen Sensor zur Erfassung von Gegenständen in einem Überwachungsbereich, mit wenigstens einem Sender, wenigstens einem Empfänger und einer Spiegeleinheit mit wenigstens zwei Umlenkspiegeln, wobei bei freiem Überwachungsbereich vom Sender emittierte Sendelichtstrahlen über die Umlenkspiegel der Spiegeleinheit zum Empfänger geführt sind, wobei die Spiegeleinheit in einem Gehäuse integriert ist, dessen Innenwände im Bereich zwischen den Umlenkspiegeln mit einem reflexionsmindernden Faltteil verkleidet sind.

Die DE 20 2005 010 358 U1 offenbart ein optoelektronisches Lichtgitter zum Erfassen von Objekten in einem Überwachungsbereich, wobei an einem ersten Ende des Überwachungsbereiches eine optoelektronische Einheit angeordnet ist, in welcher entlang einer Längsrichtung mehrere, Sendelichtbündel aussendende Lichtsender und mehrere Empfangslichtbündel aufnehmende Lichtempfänger aufgereiht angeordnet sind, wobei zeitlich versetzt immer nur ein zusammenwirkendes Lichtsender-/Lichtempfängerpaar aktiviert ist, während auf der zweiten Seite des Überwachungsbereiches eine Lichtumlenkeinheit vorhanden ist, die das Sendelichtbündel umlenkt und schliesslich wieder, um einen Strahlabstandsbetrag parallel versetzt, in entgegengesetzter Richtung durch den Überwachungsbereich zur optoelektronischen Einheit zurückführt.

Die DE 20 2014 101 761 U1 offenbart eine Erfassungsvorrichtung zum Erfassen von Verunreinigungen an einer Überwachungsfläche umfassend eine Scheibe mit einer Vorderfläche und einer Rückfläche, wobei die Vorderfläche oder ein Teil derselben die Überwachungsfläche bildet, einen hinter der Scheibe angeordneten Lichtsender zum Beleuchten der Überwachungsfläche von der Rückfläche der Scheibe aus und einen hinter der Scheibe angeordneten Lichtempfänger zum Empfangen von Empfangslicht und zum Ausgeben eines auf dem Empfangslicht beruhenden Verunreinigungssignals, wobei die Überwachungsfläche eine lichtstreuende Feinstruktur aufweist.

Die DE 10 2009 051 188 A1 offenbart einen Lichtsignalgeber und ein Lichtempfängermodul für einen optischen Sensor für ein industrielles Automatisierungssystem mit einer halbleiterbasierten Lichtquelle, welche in einer Leiterplatte integriert ist und einem Spiegel oder Prisma zur Umlenkung der Lichtstrahlen.

Die EP 2 157 449 B1 offenbart einen optoelektronischen Sensor zur Erfassung von Objekten in einem Überwachungsbereich mit wenigstens einem Gehäuse und einem Prisma als Umlenkeinheit.

Ein Prisma zur Strahlumlenkung ist relativ teuer. Eine Strahlfaltung mit einem Prisma nach dem Stand der Technik hat den weiteren Nachteil, dass bei steileren Einfallswinkeln der Grenzwinkel einer Totalreflexion nicht erreicht wird und damit Lichtleistung verloren geht.

Eine Aufgabe der Erfindung besteht darin, eine Mehrstrahllichtschranke in einem kleinen Gehäuse bereitzustellen, wobei dennoch eine hohe Reichweite erzielt werden soll.

Die Aufgabe wird gemäß Anspruch 1 gelöst durch eine Mehrstrahllichtschranke zur Erfassung von Objekten in einem Überwachungsbereich mit wenigstens einem Gehäuse mit einer Gehäuselängsachse, mit wenigstens einem Sendelichtstrahlen emittierenden Sendermodul mit einem Sendeelement und mit einer Steuereinheit zur Ansteuerung des Sendermoduls und/oder wenigstens einem Empfangslichtstrahlen empfangenden Empfängermodul mit einem Empfangselement und mit einer Auswerte-einheit zur Generierung eines Objektfeststellungssignals in Abhängigkeit von am Ausgang des Empfängermoduls anstehenden Empfangssignalen, mit jeweils einer Linse, welche vor dem Sendelement und oder dem Empfangselement angeordnet ist, mit einer Leiterplatte, auf der die Sendeelemente und/oder die Empfangselemente angeordnet sind, wobei wenigstens ein Spiegel als Umlenkeinheit für die Sende- und/oder Empfangslichtstrahlen in einem Abstand vor dem Sende- und/oder Empfangselement angeordnet ist, wobei der Spiegel entlang des Strahlengangs zwischen der Linse und dem Sendelement oder zwischen der Linse und dem Empfangselement angeordnet ist und die Linse in Richtung der Gehäuselängsachse eine größere Ausdehnung aufweist als quer zu der Gehäuselängsachse.

Die Linse weist damit in Richtung der Gehäuselängsachse und quer zur optischen Achse der Linse eine größere Ausdehnung auf, als quer zu der Gehäuselängsachse und quer zur optischen Achse der Linse.

Die Linse ist dabei bevorzugt dünner bzw. weist in Richtung der optischen Achse der Linse eine geringere Ausdehnung auf, als quer zu der Gehäuselängsachse und quer zur optischen Achse der Linse.

Es handelt sich dabei also um eine Linse, die an den Rändern parallel zur Gehäuselängsachse oder entlang der Gehäuselängsachse abgeflacht ist.

Bei der Mehrstrahllichtschranke handelt es sich um ein Sicherheitssystem gemäß Maschinensicherheit, beispielsweise gemäß der Norm EN/ISO 13849-1 bzw. der Norm EN/IEC 62061, die beispielsweise den Rahmen für funktionale Sicherheit von sicherheitsbezogenen elektrischen Steuerungssystemen und deren Untersystemen an Maschinen bereitstellt. Bei der Mehrstrahllichtschranke handelt es sich beispielsweise um eine sichere berührungslose Schutzeinrichtung bzw. einen sicheren optoelektronischen Sensor gemäß EN 61496-1/2.

Gemäß der Erfindung wird zur Vergrößerung der Brennweite eine Strahlfaltung mittels dem Spiegel vorgenommen. Damit kann der vorhandene Bauraum optimal genutzt werden.

Bei einer Mehrstrahllichtschranke ist im Gegensatz zu einem Lichtgitter, eine Anordnung sehr dicht benachbarter Strahlen im Gehäuse nicht notwendig. Bei einer Mehrstrahllichtschranke ist zwischen den einzelnen Empfängermodulen bzw. den einzelnen Sendermodulen im Gehäuse Platz. Darüber hinaus verringern sich durch die höhere Brennweite die Mittendicke der Linse bzw. spritzgegossenen Linse und damit die Herstellkosten.

Gleichzeitig ist eine Vergrößerung der Öffnung der Linse in Gehäuselängsrichtung realisiert. Insgesamt kann damit die relative Öffnung, also das Verhältnis aus Brennweite und Linsenöffnung konstant bleiben, was für eine Robustheit des optomechanischen, bzw. optoelektronischen Systems von Vorteil ist.

In einer bevorzugten Ausführung der Erfindung beträgt die Strahlumlenkung durch den Spiegel etwa 90 Grad. Dadurch wird der Bauraum im Lichtgittergehäuse optimal ausgenutzt, bzw. kann das Gehäuse minimal klein ausgebildet sein.

In Weiterbildung der Erfindung ist eine optische Achse der Sendeelemente und/oder Empfangselemente senkrecht zu der Leiterplatte angeordnet, auf der die Sendeelemente und/oder Empfangselemente positioniert sind. Die Leiterplatte, eine Sendefläche des Sendeelements und/oder eine Empfangsfläche des Empfangselements verlaufen damit etwa parallel zueinander. Dadurch kann zum einen das Sendeelement und/oder das Empfangselement sehr präzise in der Ausrichtung auf der Leiterplatte befestigt werden und zum anderen die Leiterplatte selbst sehr genau zum Spiegel angeordnet bzw. ausgerichtet werden.

In der erfindungsgemäßen Ausführungsform ist auf der Spiegelseite eine Zwischenblende angeordnet. Die Zwischenblende befindet sich auf der Spiegeloberfläche. Die Zwischenblende weist eine ovalförmige Öffnung auf. Diese Zwischenblende dient der Vermeidung unerwünschter Reflexionen, beispielsweise von Streulicht, bei schrägem Lichteinfall. Weiter weist die Blende einen Bereich auf, der die ovale Öffnung weiter abdeckt, um Rückreflexionen zu vermeiden.

In einer besonders bevorzugten Ausführungsform ist die Blende aufgedruckt, weist eine lichtabsorbierende Schicht auf und weist eine Schichtdicke von <= 10 µm auf.

Mittels Bedruckung, beispielsweise Siebdruck oder Tampondruck wird eine lichtabsorbierende Schicht auf dem Spiegel aufgebracht, welche die Funktion einer Zwischenblende besitzt. Besonders günstig ist dabei, dass die Zwischenblende als Bedruckung extrem dünn, nämlich kleiner als 10 µm ausgeführt werden kann. Dadurch entstehen keine zusätzlichen Flächenstufen, welche eine Gefahr weiterer Lichtstreuung bergen. Spritzgegossene Zwischenblenden müssten dagegen eine Dicke von mehreren 100 µm aufweisen, um eine ausreichende optische Dichte zu erreichen.

Darüber hinaus wird die Bedruckung zur Unterdrückung von Rückreflexionen der nichtentspiegelten Linsenflächen genutzt.

In Weiterbildung der Erfindung sind mindestens die Linse, der Spiegel und die Leiterplatte an einem Tubus angeordnet.

Der Tubus ist in Weiterbildung der Erfindung identisch für das Sendermodul und das Empfängermodul. Die Leiterplatten mit den Sendelementen bzw. Empfangselementen werden beispielsweise mittels zwei Schnapphaken und zwei Positionsstiften mit Dreizack am Tubus fixiert.

Da das Sendeelement, beispielsweise eine Sendediode beim Sendermodul und das Empfangselement, beispielsweise eine Empfangsdiode beim Empfängermodul einen unterschiedlichen Abstand zu einer Blende haben, sind für Sendermodul und Empfängermodul unterschiedliche Leiterplattendicken vorgesehen. Beispielsweise beträgt die Leiterplattendicke des Sendermoduls 1,5 mm und die Leiterplattendicke des Empfängermoduls 1 mm. Wegen der unterschiedlichen Leiterplattendicke gibt es am Tubus unterschiedlich hohe Anschlagsflächen für die Leiterplatten.

In einer alternativen Weiterbildung beträgt die Strahlumlenkung durch den Spiegel etwa 180 Grad und der Spiegel ist sphärisch ausgebildet.

Weiter wird die Aufgabe gelöst durch eine Mehrstrahllichtschranke zur Erfassung von Objekten in einem Überwachungsbereich mit einer Umlenkeinheit, mit wenigstens einem Gehäuse mit einer Gehäuselängsachse, mit wenigstens einem Sendelichtstrahlen emittierenden Sendeelement und wenigstens einem Empfangslichtstrahlen empfangenden Empfangselement, mit jeweils einer Linse, welche vor dem Sendelement und/oder dem Empfangselement angeordnet ist, wobei das Sendeelement und das Empfangselement von jeweils einem Ende eines Lichtleiters gebildet ist, wobei wenigstens ein Spiegel als Umlenkeinheit jeweils für die Sendelichtstrahlen und die Empfangslichtstrahlen in einem Abstand vor dem Sendeelement und dem Empfangselement angeordnet ist, wobei der Spiegel entlang des Strahlengangs zwischen der Linse und dem Sendelement und zwischen der Linse und dem Empfangselement angeordnet ist.

Bei geringer Reichweitenanforderung werden Mehrstrahllichtschranken, insbesondere Sicherheits-Mehrstrahllichtschranken häufig als sogenannte Aktiv-Passiv Systeme aufgebaut. Dabei wird auf der einen Seite des Überwachungsbereichs eine Gerätestange verwendet, die sowohl Sendermodule als auch Empfangsmodule aufnimmt. Zur optischen Lichtübertragung wird dann auf der anderen Seite des Überwachungsbereichs eine 180 Grad Lichtumlenkeinheit gebraucht. Die Lichtumlenkung wird z.B. mithilfe von flexiblen Polymerlichtleitern realisiert.

Dazu müssen die Lichtleiterenden an die Blenden der Optikmodule gekoppelt werden. Bei der erforderlichen 180 Grad Strahlumlenkung ist damit eine Biegung des Licht-leiters von 180 Grad notwendig. Eine verlustarme Lichtumlenkung ist nur bei Einhaltung eines großen Biegeradius möglich, welcher damit die Größe des Gerätegehäuses bestimmt. Durch die bereits im Optikmodul integrierte Strahlumlenkung kann der Lichtleiter gerade durch das Gehäuse geführt werden und die Lichtverluste durch den Biegeradius entfallen. Dadurch ist es möglich, ein kleineres Gehäuse als im Stand der Technik für die Lichtleiterumlenkung einzusetzen und so gleiche Gehäuse für die Aktivseite und für die passive Umlenkeinheit bereitzustellen.

In Weiterbildung der Erfindung sind mindestens die Linse, der Spiegel und jeweils ein Ende des Lichtleiters an einem Tubus angeordnet.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: eine Mehrstrahllichtschranke nach dem Stand der Technik;
- Figur 2: die Mehrstrahllichtschranke gemäß Figur 1 in einer Querschnittsdarstellung;
- Figur 3: ein Gehäuseprofil einer Mehrstrahllichtschranke gemäß Figur 2 nach dem Stand der Technik;
- Figur 4: ein Gehäuseprofil eines Lichtvorhangs nach dem Stand der Technik;
- Figur 5: eine Strahlumlenkung mittels eines Prismas nach dem Stand der Technik;
- Figur 5.1: eine Mehrstrahllichtschranke gemäß der vorliegenden Erfindung;
- Figur 6: eine Strahlumlenkung gemäß der vorliegenden Erfindung;
- Figur 7: ein Sendermodul bzw. ein Empfängermodul in einem Gehäuse;
- Figur 8: das Sendermodul bzw. das Empfängermodul gemäß Figur 7 in einer Querschnittdarstellung;
- Figur 9: das Sendermodul bzw. Empfängermodul gemäß Figur 7 in einer Längsschnittdarstellung;
- Figur 10: einen Tubus;
- Figur 11: einen Tubus mit Linse und Leiterplatte und einem Sendeelement;
- Figur 12: den Tubus gemäß Figur 11 in einer Längsschnittdarstellung;
- Figur 13: einen Tubus mit Linse und Leiterplatte für das Empfangsmodul;
- Figur 14: den Tubus gemäß Figur 13 in einer Längsschnittdarstellung;
- Figur 15: einen Tubus mit einem Spiegel und einer Zwischenblende;
- Figur 16: einen Tubus gemäß Figur 15 in einer Längsschnittdarstellung;
- Figur 17: einen Spiegel mit einer aufgedruckten Zwischenblende;
- Figur 18: eine Linse mit einem sphärischen Spiegel zur 180 Grad Umlenkung;
- Figur 19: eine Linse mit einem sphärischen Spiegel und einer Leiterplatte;
- Figur 20: eine Leiterplatte gemäß Figur 19 in einer Frontansicht;
- Figur 21: eine Anordnung gemäß Figur 19 in einem Gehäuse in einer Querschnittdarstellung;
- Figur 22: eine passive Umlenkeinheit mit einem Lichtleiter;
- Figur 23: eine passive Umlenkeinheit mit einem Lichtleiter.

In den nachfolgenden Figuren sind identische Teile mit identischen Bezugszeichen versehen.

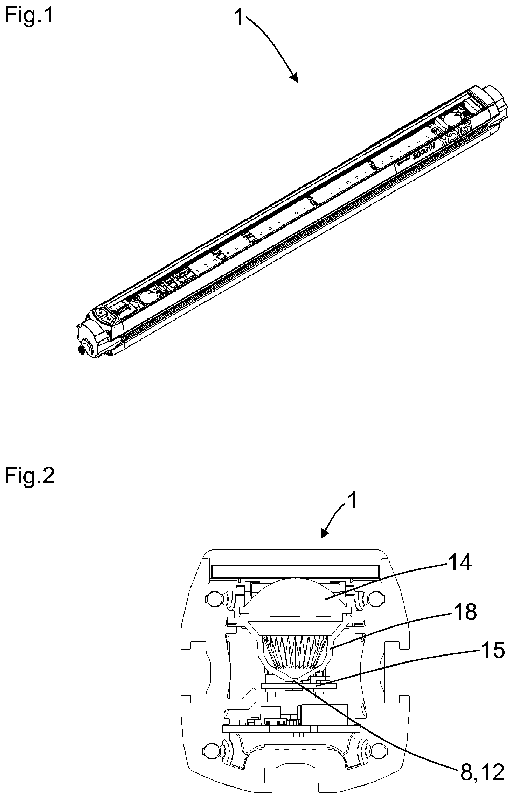

Figur 1 zeigt eine Mehrstrahllichtschranke 1 mit der Produktbezeichnung M4000 nach dem Stand der Technik.

Figur 2 zeigt die Mehrstrahllichtschranke 1 gemäß Figur 1 in einer Querschnittdarstellung. Dabei ist das Sendeelement 8 bzw. das Empfangselement 12 auf einer Leiterplatte 15 angeordnet, welche direkt an einem Tubus 18 angeordnet ist. An der Lichtaustrittsseite des Tubus 18 ist eine Linse 14 mit einer großen Dicke angeordnet.

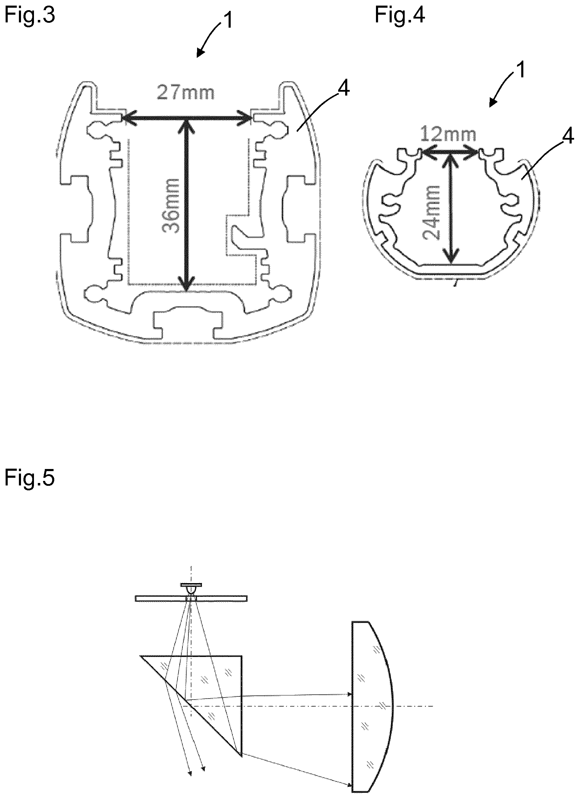

Figur 3 zeigt ein Gehäuse 4 bzw. ein Gehäuseprofil einer Mehrstrahllichtschranke 1 gemäß Figur 2 nach dem Stand der Technik. Das Gehäuse 4 ist relativ groß, wodurch viel Material, in diesem Fall Aluminium, für das Gehäuse 4 notwendig ist, welches vergleichsweise teuer ist. Der verfügbare Innenraum des Gehäuseprofils beträgt ca. 36 mm in der Höhe und ca. 27 mm in der Breite.

Figur 4 zeigt ein weiteres Gehäuseprofil eines Lichtvorhangs nach dem Stand der Technik. Dieses Gehäuse 4 soll gemäß der Erfindung für eine Mehrstrahllichtschranke 1 eingesetzt werden. Das Gehäuse 4 ist wesentlich kleiner und dünnwandiger als das Gehäuse 4 gemäß Figur 3. Dadurch ist das Gehäuse 4 sehr viel preiswerter herstellbar. Der verfügbare Innenraum des Gehäuseprofils beträgt ca. 24 mm in der Höhe und ca. 12 mm in der Breite.

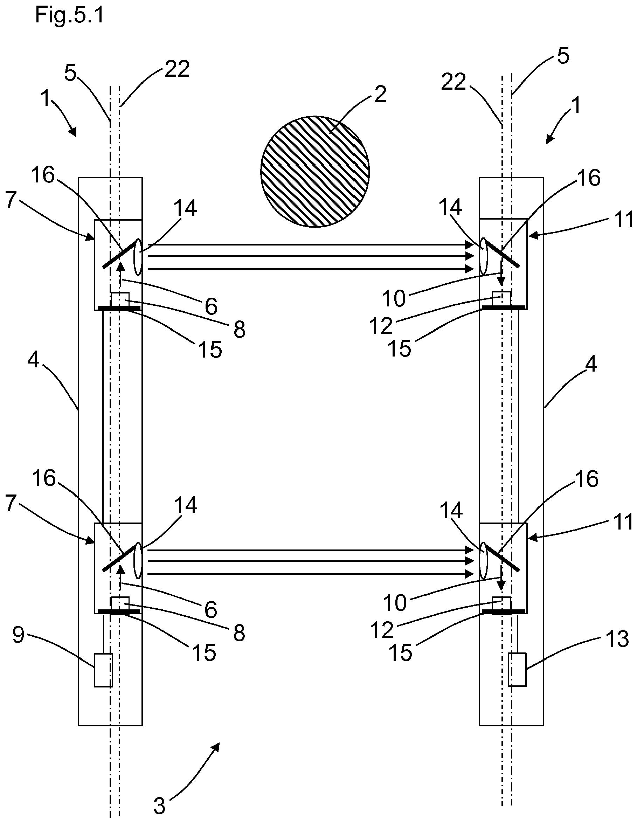

Figur 5 zeigt eine Strahlumlenkung mittels eines Prismas nach dem Stand der Technik. Ein Prisma ist teuer in der Herstellung und die Lichtumlenkung ist abhängig von einem Totalreflexionswinkel. D.h. schräge Lichtstrahlen werden gar nicht umgelenkt, sondern verlassen das Prisma in unerwünschten Richtungen.

Figur 5.1 zeigt eine Mehrstrahllichtschranke 1 zur Erfassung von Objekten 2 in einem Überwachungsbereich 3 mit wenigstens einem Gehäuse 4 mit einer Gehäuselängsachse 5, mit wenigstens einem Sendelichtstrahlen 6 emittierenden Sendermodul 7 mit einem Sendeelement 8 und mit einer Steuereinheit 9 zur Ansteuerung des Sendermoduls 7 oder der Sendermodule 7 und/oder wenigstens einem Empfangslichtstrahlen 10 empfangenden Empfängermodul 11 oder Empfängermodule 11 mit einem Empfangselement 12 und mit einer Auswerteeinheit 13 zur Generierung eines Objektfeststellungssignals in Abhängigkeit von am Ausgang des Empfängermoduls 11 anstehenden Empfangssignalen, mit jeweils einer Linse 14, welche vor dem Sendeelement 8 und/oder dem Empfangselement 12 angeordnet ist, mit einer Leiterplatte 15, auf der die Sendeelemente 8 und/oder die Empfangselemente 12 angeordnet sind, wobei wenigstens ein Spiegel 16 als Umlenkeinheit für die Sendelichtstrahlen 6 und/oder Empfangslichtstrahlen 10 in einem Abstand vor dem Sendeelement 8 und/oder Empfangselement 12 angeordnet ist, wobei der Spiegel 16 entlang des Strahlengangs zwischen der Linse 14 und dem Sendelement 8 oder zwischen der Linse 14 und dem Empfangselement 12 angeordnet ist und die Linse 14 in Richtung der Gehäuselängsachse 5 eine größere Ausdehnung aufweist als quer zu der Gehäuselängsachse 5. Die Strahlumlenkung, welche durch den Spiegel 16 hervorgerufen wird, beträgt etwa 90°.

Gemäß Figur 5.1 ist eine optische Achse 22 der Sendeelemente 8 und/oder Empfangselemente 12 senkrecht zu der Leiterplatte 15 angeordnet, auf der die Sendeelemente 8 und/oder Empfangselemente 12 positioniert sind.

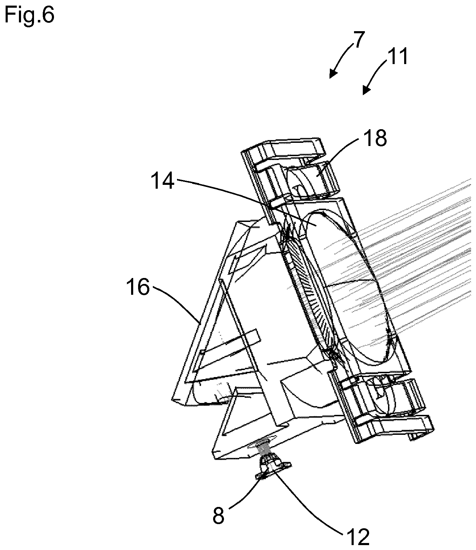

Figur 6 zeigt eine Strahlumlenkung gemäß der vorliegenden Erfindung. Figur 6 zeigt ein Sendemodul 7 bzw. ein Empfangsmodul 11. Das Sendemodul 7 bzw. Empfangsmodul 11 weist einen Tubus 18 auf. Die Linse 14, der Spiegel 16 und die Leiterplatte sind an einem Tubus 18 angeordnet. Der Tubus 18 ist beispielsweise aus schwarzem Kunststoff hergestellt, so dass Streulicht absorbiert wird, wodurch störende Reflexionen vermieden werden.

Im Falle des Sendemoduls 7 werden die Lichtstrahlen durch das Sendeelement 8 ausgesendet. Die Lichtstrahlen fallen auf den Spiegel 16 und werden um ca. 90° umgelenkt. Danach werden die Lichtstrahlen durch die Linse 14 gebündelt und verlassen das Sendemodul 7.

Im Falle des Empfangsmoduls 11 treffen die Lichtstrahlen auf die Linse 14 und treffen gebündelt auf den Spiegel 16. Nach einer ca. 90° Umlenkung auf dem Spiegel 16 treffen die Lichtstrahlen auf das Empfangselement 12.

Bei der Linse 14 handelt es sich um eine ovalförmige konvexe Linse 14. Die Linse 14 weist in Richtung der Längsachse des Sendemoduls 7 bzw. Empfangsmoduls 11 eine größere Ausdehnung auf als quer zu der Längsachse. Die Linse 14 ist vorzugsweise aus Kunststoff hergestellt. Insbesondere ist die Linse 14 als Kunststoffspritzling hergestellt.

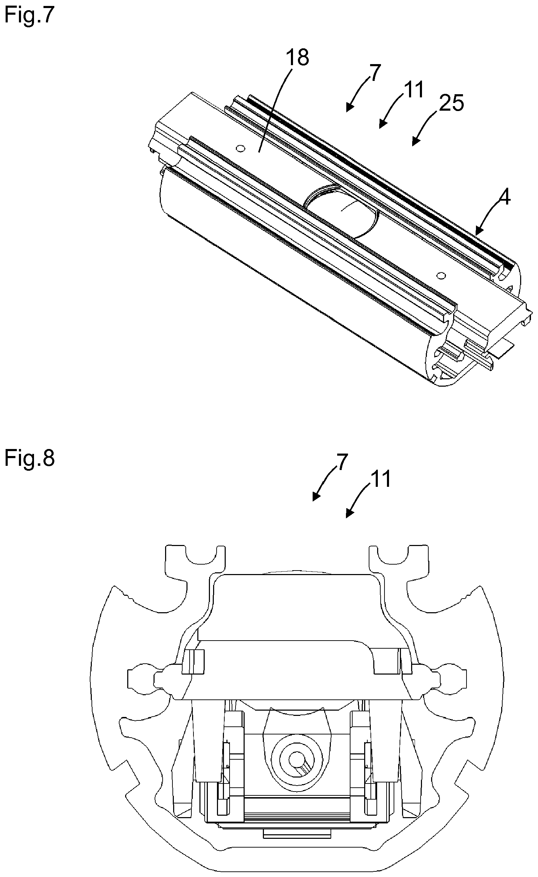

Figur 7 zeigt ein Sendermodul 7 bzw. ein Empfängermodul 11 in einem Gehäuse 4. Das Sendermodul 7 bzw. Empfängermodul 11 wird auch als Optikmodul 25 bezeichnet. Das Optikmodul 25 ist in einer Längsnut in dem Gehäuse 4 gehalten. Hierzu weist der Tubus 18 des Optikmoduls 25 gegenüberliegende Leisten auf, die jeweils in die gegenüberliegenden Nuten des Gehäuses 4 ragen.

Figur 8 zeigt das Sendermodul 7 bzw. das Empfängermodul 11 gemäß Figur 7 in einer Querschnittdarstellung.

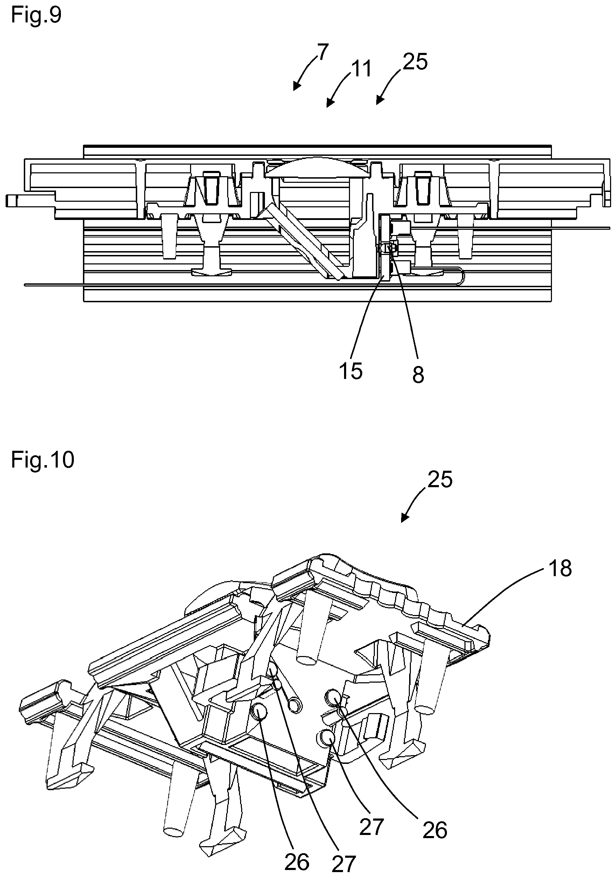

Figur 9 zeigt das Sendermodul 7 bzw. Empfängermodul 11 gemäß Figur 7 in einer Längsschnittdarstellung. Dabei ist ein Sendemodul 7 dargestellt. Die Leiterplatte 15 mit dem Sendeelement 8 weist Kontaktverbindungen auf, wodurch eine elektrische Verbindung zwischen den Optikmodulen 25 hergestellt wird. Bei den Kontaktverbindungen handelt es sich beispielsweise um Stecker und die elektrischen Verbindungen werden beispielsweise durch Flachbandleitungen oder flexible Leiterfolien gebildet.

Figur 10 zeigt einen Tubus 18 des Optikmoduls 25 gemäß Figur 9. Der Tubus 18 weist beispielsweise erste Anschlagsflächen 26 für eine Senderleiterplatte auf und zweite Anschlagsflächen 27 für eine Empfängerleiterplatte auf. Die ersten Anschlagsflächen 26 sind niedriger als die zweiten Anschlagsflächen 27 und damit unterschiedlich. Dadurch wird die Leiterplatte mit dem Sendeelement und die Leiterplatte mit dem Empfangselement an unterschiedlichen Positionen fixiert.

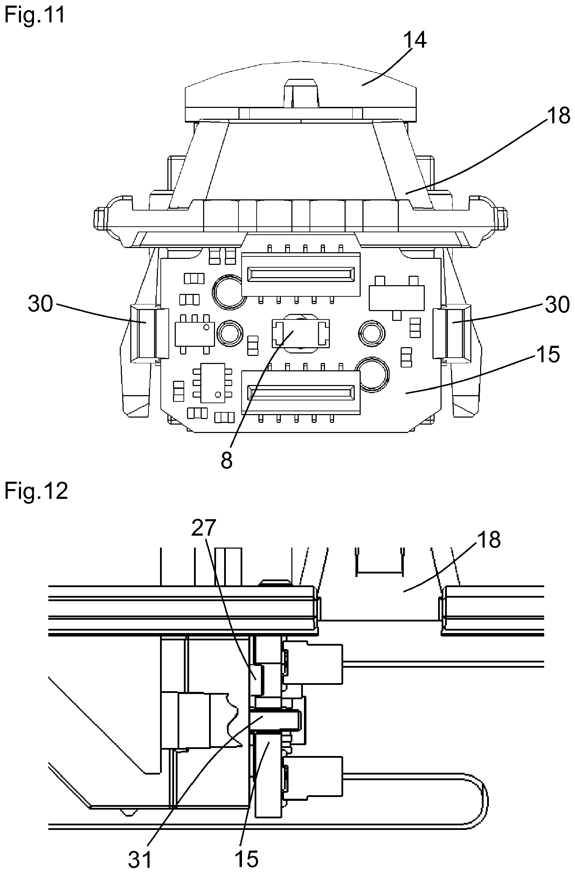

Figur 11 zeigt einen Tubus 18 mit Linse 14 und Leiterplatte 15 und einem Sendeelement 8 in einer Draufsicht auf die Leiterplatte 15. In der Mitte der Leiterplatte 15 ist das Sendeelement 8 angeordnet. Die Leiterplatte 15 ist mittels zweier Schnapphaken 30 an dem Tubus 18 befestigt. Die Leiterplatte 15 wird mittels der Schnapphaken 30 gegen die ersten Anschlagsflächen gedrückt und damit positionsgenau fixiert.

Figur 12 zeigt einen Ausschnitt des Tubus 18 gemäß Figur 11 in einer Längsschnittdarstellung. Die Leiterplatte 15 für das Sendeelement weist an den Stellen der zweiten Anschlagsflächen 27 Öffnungen bzw. Bohrungen auf, so dass die zweiten Anschlagsflächen 27 nicht genutzt werden. Weiter sind Positionsstifte 31 mit drei Fasen vorgesehen, wobei die Fasen jeweils in einem Abstand von 120 Grad zueinander in Längsrichtung an dem Positionierstift 31 angeordnet sind. Die Leiterplatte 15 wird durch die Positionierstifte 31 hochgenau und präzise ohne Spiel positioniert, so dass die Position des Sendeelements nun in allen Achsen exakt zum Tubus 18 ausgerichtet ist. Die Leiterplatte 15 mit dem Sendeelement hat beispielsweise eine Dicke von 1,5 mm.

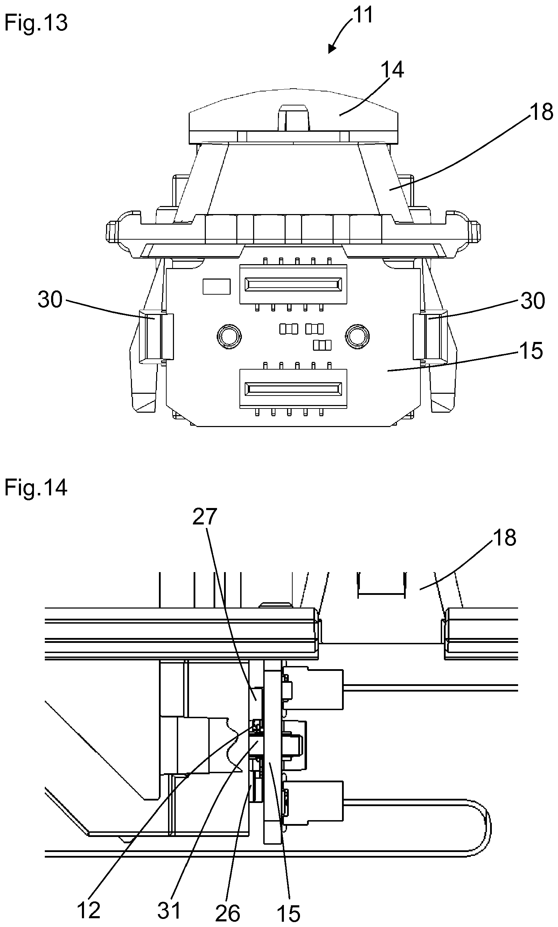

Figur 13 zeigt einen Tubus 18 mit der Linse 14 und der Leiterplatte 15 für das Empfangsmodul 11 in einer Draufsicht auf die Leiterplatte 15. In der Mitte der Leiterplatte 15 ist das Empfangselement angeordnet. Die Leiterplatte 15 ist mittels zweier Schnapphaken 30 an dem Tubus 18 befestigt. Die Leiterplatte 15 wird mittels der Schnapphaken 30 gegen die ersten Anschlagsflächen gedrückt und damit positionsgenau fixiert.

Figur 14 zeigt einen Ausschnitt des Tubus 18 gemäß Figur 13 in einer Längsschnittdarstellung. Die Leiterplatte 15 für das Empfangselement 12 liegt an den zweiten Anschlagsflächen 27 auf, so dass die ersten Anschlagsflächen 26 nicht genutzt werden. Weiter sind Positionsstifte 31 mit drei Fasen vorgesehen, wobei die Fasen jeweils in einem Abstand von 120 Grad zueinander in Längsrichtung an dem Positionierstift 31 angeordnet sind. Die Leiterplatte 15 wird durch die Positionierstifte 31 hochgenau und präzise ohne Spiel positioniert, so dass die Position des Empfangselements 12 nun in allen Achsen exakt zum Tubus 18 ausgerichtet ist. Die Leiterplatte 15 mit dem Empfangselement 12 hat beispielsweise eine Dicke von 1 mm.

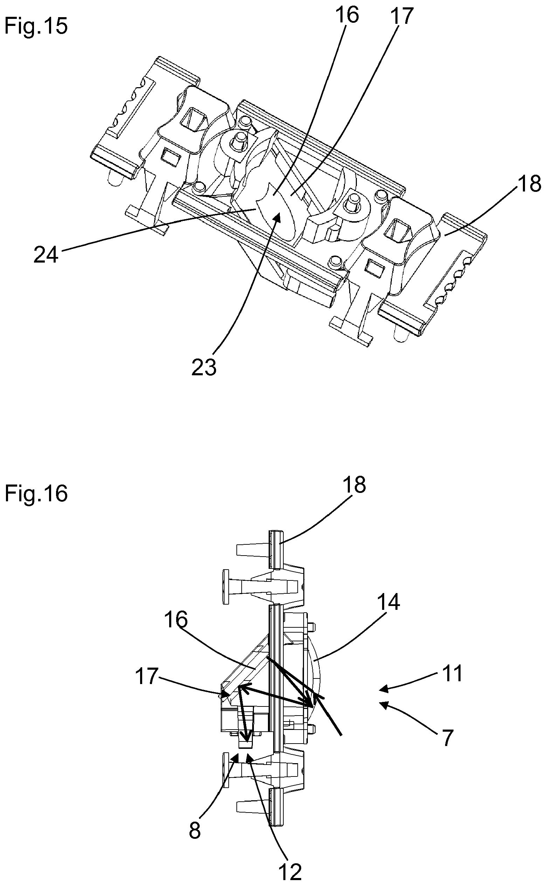

Figur 15 zeigt einen Tubus 18 mit dem Spiegel 16 und einer Blende 17 bzw. Zwischenblende. Auf der Spiegelseite 23 des Spiegels 16 ist die Blende 17 angeordnet. Die Blende 17 ist beispielsweise aufgedruckt und weist eine lichtabsorbierende Schicht 24 auf und beispielsweise eine Schichtdicke von <= 10 µm.

Figur 16 zeigt einen Tubus 18 gemäß Figur 15 in einer Längsschnittdarstellung mit der Linse 14 und dem Spiegel 16 zur Verdeutlichung der Funktionsweise der Blende 17. Lichtstrahlen, die korrekt frontal auf die Linse 14 treffen, werden von dem Spiegel 16 umgelenkt und treffen auf dem Empfangselement 12. Lichtstrahlen, die schräg und damit nicht korrekt auf die Linse 14 treffen, fallen auf den Randbereich der Blende 17 und werden dort absorbiert, so dass diese nicht auf das Empfangselement 12 gelangen.

Bei einem Sendermodul 7 funktioniert die Blende 17 auf eine analoge Weise, nämlich in der Art, dass korrekte Lichtstrahlen des Sendelements 8 auf die Spiegelfläche der Blende 17 treffen und umgelenkt werden. Lichtstrahlen, die das Sendeelement 8 in einem schrägen nicht korrekten Winkel verlassen, treffen auf den Randbereich der Blende 17 und werden dort absorbiert, so dass diese nicht zur Linse 14 des Sendemoduls 7 gelangen.

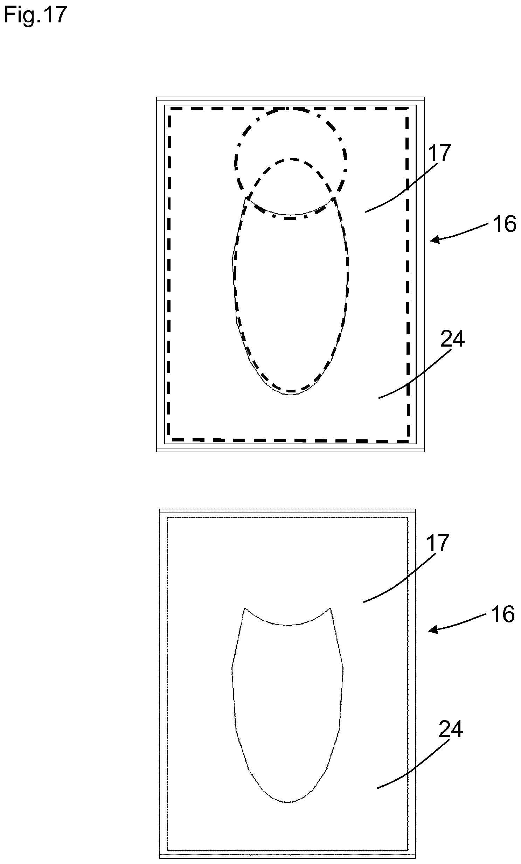

Figur 17 zeigt einen Spiegel 16 mit einer aufgedruckten Blende 17 bzw. Zwischenblende. Die Blende 17 hat eine ovale Grundform. An einem Ende weist die Blende 17 eine teilkreisförmige Abdeckung auf. Dieser Bereich dient zur Unterdrückung von Rückreflexionen der Linse. Der mittlere Bereich ist die Spiegelfläche. Der äußere Bereich ist eine lichtabsorbierende Schicht 24. Der Spiegel 16 selbst ist beispielsweise rechteckförmig oder quadratisch, wodurch der Spiegel 16 selbst einfach montiert bzw. positioniert werden kann.

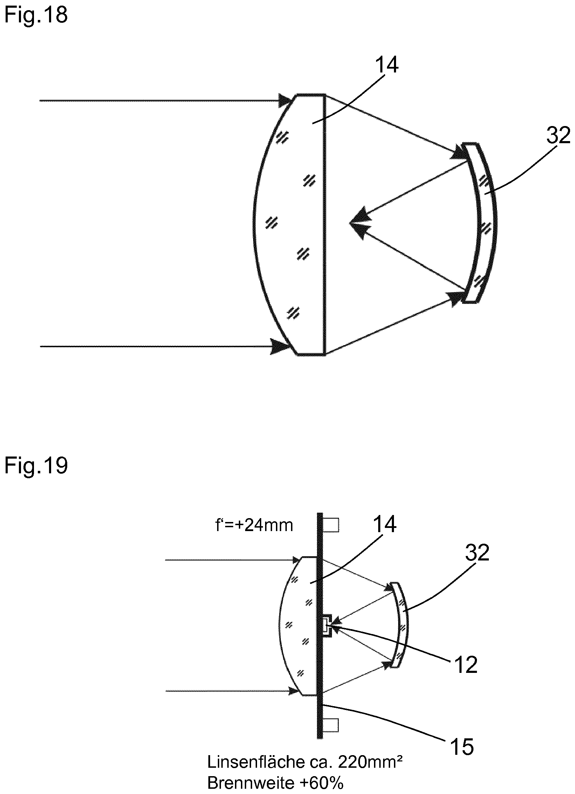

Figur 18 zeigt schematisch eine Linse 14 mit einem sphärischen Spiegel 32 zur 180 Grad Umlenkung. Die Linse 14 und der sphärische Spiegel 32 sind ebenfalls beispielsweise an einem Tubus befestigt. Empfangene Lichtstrahlen werden durch die Linse 14 gebündelt und treffen auf den sphärischen Spiegel 32. Dort werden die Lichtstrahlen umgelenkt und treffen in entgegengesetzter Richtung auf ein Empfangselement. Bei einem Sendemodul werden die Lichtstrahlen durch ein Sendeelement ausgesendet und von dem sphärischen Spiegel 32 in eine entgegengesetzte Richtung auf die Linse 14 umgelenkt. Nach einer Strahlformung durch die Linse 14 wird ein nahezu paralleles Lichtstrahlbündel gebildet.

Figur 19 zeigt eine Linse 14 mit einem sphärischen Spiegel 32 und einer Leiterplatte 15 ähnlich zu dem Aufbau gemäß Figur 18. Der Abstand zwischen Linsenoberfläche und dem sphärischen Spiegel 32 beträgt beispielsweise 20 mm. Die Linse 14 weist beispielsweise eine Brennweite von 24 mm auf. Die wirksame Linsenausdehnung in Längsrichtung beträgt beispielsweise 26 mm bei einer Linsenfläche von 220 mm². Gemäß Figur 19 sind die Linse 14 und das Sendeelement 8 bzw. das Empfangselement 12 direkt auf der Leiterplatte 15 angeordnet.

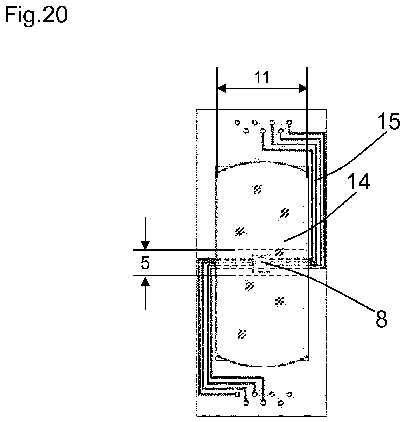

Figur 20 zeigt eine Leiterplatte 15 gemäß Figur 19 in einer Frontansicht mit der Linse 14 und dem Sendeelement 8 bzw. einem Empfangselement. Die Linse 14 hat eine Breite von beispielsweise 11 mm. Das Sendeelement bzw. das Empfangselement 12 ist auf einem Steg der Leiterplatte 15 mit einer Breite von beispielsweise 5 mm angeordnet.

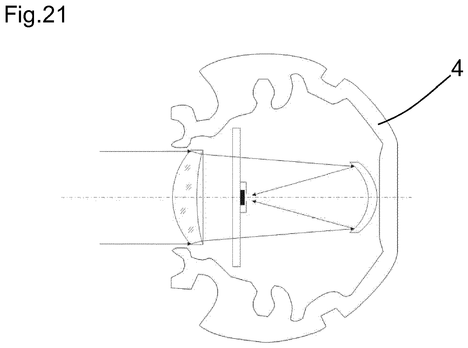

Figur 21 zeigt eine Anordnung gemäß Figur 19 in einem Gehäuse 4 in einer Querschnittdarstellung.

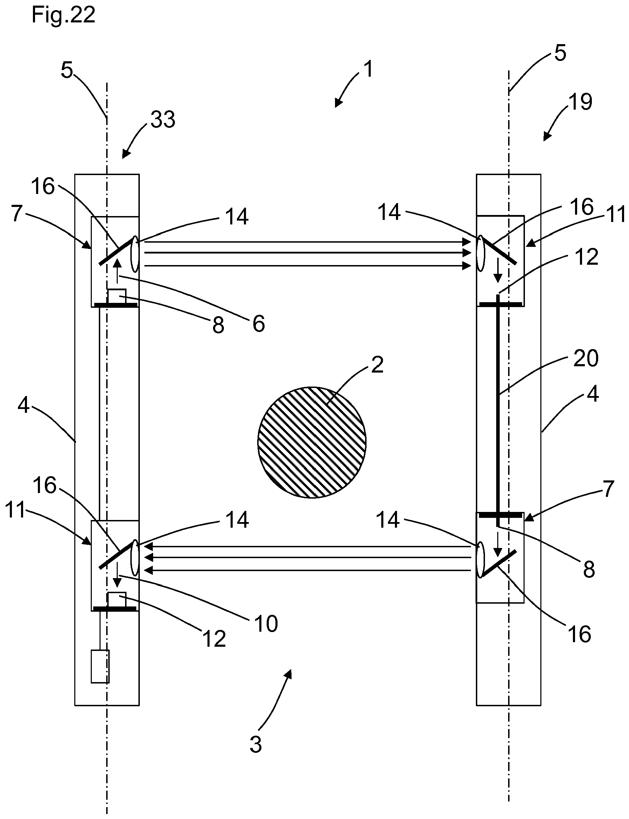

Figur 22 zeigt schematisch eine Mehrstrahllichtschranke 1 mit einer passiven Umlenkeinheit 19 mit einem Lichtleiter 20 in einem ersten Gehäuse 4 und eine aktive Sende/Empfangseinheit 33 mit einem Sendemodul 7 und einem Empfangsmodul 11 in einem zweiten Gehäuse 4, welches gegenüberliegend zu dem ersten Gehäuse 4 angeordnet ist.

Die Lichtstrahlen werden von dem Sendemodul 7 der aktiven Sende/Empfangseinheit 33 ausgesendet und gelangen zu der passiven Umlenkeinheit 19. Dort wird das Licht von einem Empfangsmodul 11 empfangen. Das empfangene Licht wird über einen Lichtleiter 20 zu dem Sendemodul 7 der Umlenkeinheit 19 geleitet. Durch das Sendemodul 7 der Umlenkeinheit 19 wird das Licht an das Empfangsmodul 11 der aktiven Sende-/Empfangseinheit 33 zurückgesendet. Dadurch werden zwei optische Überwachungsstrahlen gebildet.

Figur 22 zeigt die Umlenkeinheit 19 für eine Mehrstrahllichtschranke 1 zur Erfassung von Objekten 2 in einem Überwachungsbereich 3 mit wenigstens einem Gehäuse 4 mit einer Gehäuselängsachse 5, mit wenigstens einem Sendelichtstrahlen 6 emittierenden Sendeelement 8 und wenigstens einem Empfangslichtstrahlen 10 empfangenden Empfangselement 12, mit jeweils einer Linse 14, welche vor dem Sendeelement 8 und oder dem Empfangselement 12 angeordnet ist, wobei das Sende-element 8 und das Empfangselement 12 von jeweils einem Ende eines Lichtleiters 20 gebildet ist, wobei wenigstens ein Spiegel 16 als Umlenkeinheit 19 für die Sendelichtstrahlen 6 und die Empfangslichtstrahlen 10 in einem Abstand vor dem Sendeelement 8 und dem Empfangselement 12 angeordnet ist, wobei der Spiegel 16 entlang des Strahlengangs 21 zwischen der Linse 14 und dem Sendelement 8 und zwischen der Linse 14 und dem Empfangselement 12 angeordnet ist.

Mindestens die Linse 14, der Spiegel 16 und jeweils ein Ende des Lichtleiters 20 der Umlenkeinheit sind an einem Tubus angeordnet.

Die Anordnung hat den Vorteil, dass eine Seite des Überwachungsbereichs 3, nämlich die Umlenkeinheit 19 rein passiv, ohne aktive elektronische Bauteile realisiert ist.

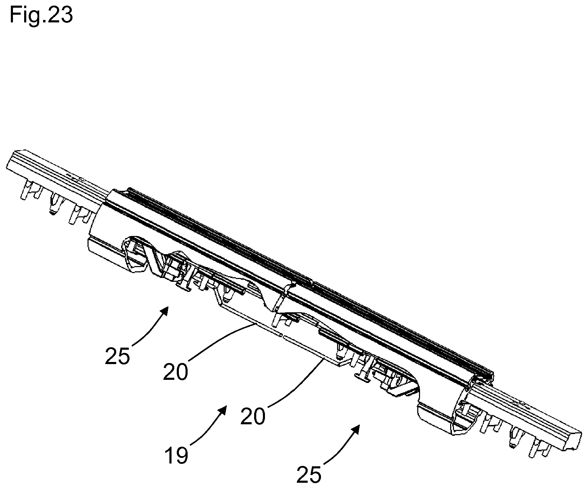

Figur 23 zeigt eine passive Umlenkeinheit 19 mit einem Lichtleiter 20 mit einem dargestellten Gehäuse 4 mit einem dargestellten großen Ausbruch, um das Innere des Gehäuses zu sehen. Die Umlenkeinheit 19 ist in der Mitte zeichnerisch unterbrochen, wodurch die beiden Enden der Umlenkeinheit 19 mit den Optikmodulen 25 dargestellt sind.

### Bezugszeichen:

- 1: Mehrstrahllichtschranke
- 2: Objekt
- 3: Überwachungsbereich
- 4: Gehäuse
- 5: Gehäuselängsachse
- 6: Sendelichtstrahlen
- 7: Sendermodul/Sendemodul
- 8: Sendeelement
- 9: Steuereinheit
- 10: Empfangslichtstrahlen
- 11: Empfängermodul/Empfangsmodul
- 12: Empfangselement
- 13: Auswerteeinheit
- 14: Linse
- 15: Leiterplatte
- 16: Spiegel
- 17: Blende
- 18: Tubus
- 19: Umlenkeinheit
- 20: Lichtleiter
- 21: Strahlengang
- 22: optische Achse
- 23: Spiegelseite
- 24: lichtabsorbierende Schicht
- 25: Optikmodul
- 26: erste Anschlagsflächen
- 27: zweite Anschlagsflächen
- 30: Schnapphaken
- 31: Positonsstifte
- 32: sphärischer Spiegel
- 33: Sender-/Empfängereinheit

## Patentansprüche

1. Mehrstrahllichtschranke (1) zur Erfassung von Objekten (2) in einem Überwachungsbereich (3)
mit wenigstens einem Gehäuse (4) mit einer Gehäuselängsachse (5), wobei sich die Mehrstahllichtschranke (1) in dem mindestens einen Gehäuse (4) befindet, mit wenigstens einem Sendelichtstrahlen (6) emittierenden Sendermodul (7) mit einem Sendeelement (8) und mit einer Steuereinheit (9) zur Ansteuerung des Sendermoduls (7)
und/oder wenigstens einem Empfangslichtstrahlen (10) empfangenden Empfängermodul (11) mit einem Empfangselement (12) und mit einer Auswerteeinheit (13) zur Generierung eines Objektfeststellungssignals in Abhängigkeit von am Ausgang des Empfängermoduls (11) anstehenden Empfangssignalen,
mit jeweils einer Linse (14), welche entlang des Strahlengangs vor dem Sende-element (8) und/oder dem Empfangselement (12) angeordnet ist,
mit einer Leiterplatte (15), auf der die Sendeelemente (8) und/oder Empfangs-elemente (12) angeordnet sind,
wobei wenigstens ein Spiegel (16) als Umlenkeinheit (19) für die Sendelichtstrahlen (6) und/oder die Empfangslichtstrahlen (10) in einem Abstand vor dem Sendeelement (8) und/oder Empfangselement (12) angeordnet ist, wobei der Spiegel (16) entlang des Strahlengangs (21) zwischen der Linse (14) und dem Sendelement (8) oder zwischen der Linse (14) und dem Empfangselement (12) angeordnet ist und die Linse (14) in Richtung der Gehäuselängsachse (5) eine größere Ausdehnung aufweist, als quer zu der Gehäuselängsachse (5), **dadurch gekennzeichnet, dass** auf der Spiegelseite (23) des Spiegels (16) eine Blende (17) angeordnet ist, wobei die Blende (17) eine ovalfömige Öffnung aufweist, wobei ein mittlerer Bereich der Blende (17) die Spiegelfläche ist und ein äußerer Bereich der Blende (17) eine lichtabsorbierende Schicht ist.

2. Mehrstrahllichtschranke nach Anspruch 1, **dadurch gekennzeichnet, dass** die Strahlumlenkung, welche durch den Spiegel (16) hervorgerufen wird, etwa 90° beträgt.

3. Mehrstrahllichtschranke nach mindestens einem der vorhergehenden Ansprüche, **dadurch gekennzeichnet, dass** eine optische Achse der Sendeelemente (8) und/oder Empfangselemente (12) senkrecht zu der Leiterplatte (15) angeordnet ist, auf der die Sendeelemente (8) und/oder Empfangselemente (12) positioniert sind.

4. Mehrstrahllichtschranke nach mindestens einem der vorhergehenden Ansprüche, **dadurch gekennzeichnet, dass** die Blende (17) aufgedruckt ist, eine lichtabsorbierende Schicht (24) aufweist und eine Schichtdicke von <= 10 µm aufweist.

5. Mehrstrahllichtschranke nach mindestens einem der vorhergehenden Ansprüche, **dadurch gekennzeichnet, dass** mindestens die Linse (14), der Spiegel (16) und die Leiterplatte (15) an einem Tubus (18) angeordnet sind.

6. Mehrstrahllichtschranke nach mindestens einem der vorhergehenden Ansprüche 1 oder 3 bis 5, **dadurch gekennzeichnet, dass** die Strahlumlenkung durch den Spiegel (16) etwa 180° beträgt und der Spiegel (16) sphärisch ausgebildet ist.

7. Mehrstrahllichtschranke nach mindestens einem der vorhergehenden Ansprüche 1 bis 6 zur Erfassung von Objekten (2) in einem Überwachungsbereich (3) mit einer Umlenkeinheit (19),
mit wenigstens einem Gehäuse (4) mit einer Gehäuselängsachse wobei sich die Mehrstahllichtschranke (1) in dem mindestens einen Gehäuse (4) befindet, mit wenigstens einem Spiegel (16) als Umlenkeinheit (19) für die Sendelichtstrahlen (6) und die Empfangslichtstrahlen, wobei die Umlenkeinheit (19) **gekennzeichnet ist durch**, wenigstens einem Sendelichtstrahlen (6) emittierenden Sendeelement (8) und wenigstens einem Empfangslichtstrahlen (10) empfangenden Empfangselement (12),
mit jeweils einer Linse (14), welche vor dem Sendeelement (8) und/oder dem Empfangselement (12) angeordnet ist,
wobei das Sendeelement (8) und das Empfangselement (12) von jeweils einem Ende eines Lichtleiters (20) gebildet ist,
wobei wenigstens ein Spiegel (16) als Umlenkeinheit (19) für die Sendelichtstrahlen (6) und die Empfangslichtstrahlen (10) in einem Abstand vor dem Sendeelement (8) und dem Empfangselement (12) angeordnet ist, wobei der Spiegel (16) entlang des Strahlengangs (21) zwischen der Linse (14) und dem Sendelement (8) und zwischen der Linse (14) und dem Empfangselement (12) angeordnet ist.

8. Mehrstrahllichtschranke nach Anspruch 7, **dadurch gekennzeichnet, dass** mindestens die Linse (14), der Spiegel (16) und jeweils ein Ende des Lichtleiters (20) an einem Tubus (18) angeordnet sind.

## Claims

1. A multi-beam light barrier (1) for detecting objects (2) in a monitored zone (3),
having at least one housing (4) with a longitudinal housing axis (5), wherein the multi-beam light barrier (1) is located in the at least one housing (4); having at least one transmitter module (7) emitting transmitted light beams (6) with a transmission element (8) and with a control unit (9) for controlling the transmitter module (7);
and/or having at least one receiver module (11) receiving received light beams (10) with a reception element (12) and with an evaluation unit (13) for generating an object determination signal in dependence on received signals applied at the output of the receiver module (11);
having a respective lens (14) that is arranged along the optical path in front of the transmission element (8) and/or in front of the reception element (12); and
having a circuit board (15) on which the transmission elements (8) and/or reception elements (12) are arranged,
wherein at least one mirror (16) is arranged as a deflection unit (19) for the transmitted light beams (6) and/or for the received light beams (10) at a spacing in front of the transmission element (8) and/or in front of the reception element (12), wherein the mirror (16) is arranged along the optical path (21) between the lens (14) and the transmission element (8) or between the lens (14) and the reception element (12), and wherein the lens (14) has a greater extent in the direction of the longitudinal housing axis (5) than transversely to the longitudinal housing axis (5), **characterized in that** a diaphragm (17) is arranged on the mirror side (23) of the mirror (16), with the diaphragm (17) having an oval aperture, and with a middle region of the diaphragm (17) being the mirror surface and an outer region of the diaphragm (17) being a light absorbing layer.

2. A multi-beam light barrier in accordance with claim 1, **characterized in that** the beam deflection that is caused by the mirror (16) amounts to approximately 90°.

3. A multi-beam light barrier in accordance with at least one of the preceding claims, **characterized in that** an optical axis of the transmission elements (8) and/or of the reception elements (12) is arranged perpendicular to the circuit board (15) on which the transmission elements (8) and/or the reception elements (12) are positioned.

4. A multi-beam light barrier in accordance with at least one of the preceding claims, **characterized in that** the diaphragm (17) is printed on, has a light absorbing layer (24), and has a layer thickness of <= 10 µm.

5. A multi-beam light barrier in accordance with at least one of the preceding claims, **characterized in that** at least the lens (14), the mirror (16), and the circuit board (15) are arranged at a tube (18).

6. A multi-beam light barrier in accordance with at least one of the preceding claims 1 or 3 to 5, **characterized in that** the beam deflection by the mirror (16) amounts to approximately 180°; and **in that** the mirror (16) is spherical.

7. A multi-beam light barrier in accordance with at least one of the preceding claims 1 to 6 for detecting objects (2) in a monitored zone (3), comprising a deflection unit (19),
having at least one housing (4) with a longitudinal housing axis, wherein the multi-beam light barrier (1) is located in the at least one housing (4); and having at least one mirror (16) as a deflection unit (19) for the transmitted light beams (6) and for the received light beams,
wherein the deflection unit (19) is **characterized by**
at least one transmission element (8) emitting transmitted light beams (6); and at least one reception element (12) receiving received light beams (10), having a respective lens (14) that is arranged in front of the transmission element (8) and/or in front of the reception element (12); and
wherein the transmission element (8) and the reception element (12) are formed by a respective end of an optical fiber (20); and
wherein at least one mirror (16) is arranged as a deflection unit (19) for the transmitted light beams (6) and for the received light beams (10) at a spacing in front of the transmission element (8) and in front of the reception element (12), with the mirror (16) being arranged along the optical path (21) between the lens (14) and the transmission element (8) and between the lens (14) and the reception element (12).

8. A multi-beam light barrier in accordance with claim 7, **characterized in that** at least the lens (14), the mirror (16), and a respective one end of the optical fiber (20) are arranged at a tube (18).

## Revendications

1. Barrière lumineuse multifaisceaux (1) pour la détection d'objets (2) dans une zone à surveiller (3),
comportant au moins un boîtier (4) ayant un axe longitudinal (5), la barrière lumineuse multifaisceaux (1) étant disposée dans ledit au moins un boîtier (4),
comportant au moins un module émetteur (7) qui émet des faisceaux lumineux d'émission (6) et qui comprend un élément émetteur (8), comportant une unité de commande (9) pour piloter le module émetteur (7),
et/ou au moins un module récepteur (11) qui reçoit des faisceaux lumineux de réception (10) et qui comprend un élément récepteur (12), et comportant une unité d'évaluation (13) pour générer un signal de détection d'objet en fonction des signaux reçus présents à la sortie du module récepteur (11), comportant chacun une lentille (14) qui est disposée le long du chemin optique en amont de l'élément émetteur (8) et/ou de l'élément récepteur (12), comportant une carte à circuits (15) sur laquelle sont disposés les éléments émetteurs (8) et/ou les éléments récepteurs (12),
dans laquelle au moins un miroir (16) est agencé en tant qu'unité de déviation (19) pour les faisceaux lumineux d'émission (6) et/ou pour les faisceaux lumineux de réception (10) à une distance en amont de l'élément émetteur (8) et/ou de l'élément récepteur (12), le miroir (16) est agencé le long du chemin optique (21) entre la lentille (14) et l'élément émetteur (8) ou entre la lentille (14) et l'élément récepteur (12), et
dans la direction de l'axe longitudinal (5) du boîtier, la lentille (14) présente une extension supérieure à celle transversalement à l'axe longitudinal (5) du boîtier,
**caractérisée en ce que**
un cache (17) est disposé sur la face réfléchissante (23) du miroir (16), le cache (17) présentant une ouverture de forme ovale, une zone centrale du cache (17) étant la surface réfléchissante, et une zone externe du cache (17) étant une couche absorbant la lumière.

2. Barrière lumineuse multifaisceaux selon la revendication 1, **caractérisée en ce que** la déviation du faisceau provoquée par le miroir (16) est d'environ 90°.

3. Barrière lumineuse multifaisceaux selon l'une au moins des revendications précédentes, **caractérisée en ce que** un axe optique des éléments émetteurs (8) et/ou des éléments récepteurs (12) est agencé perpendiculairement à la carte à circuits (15), où sont positionnés les éléments émetteurs (8) et/ou les éléments récepteurs (12).

4. Barrière lumineuse multifaisceaux selon l'une au moins des revendications précédentes, **caractérisée en ce que** le cache (17) est appliqué par impression, présente une couche absorbant la lumière (24) et présente une épaisseur de couche <= 10 µm.

5. Barrière lumineuse multifaisceaux selon l'une au moins des revendications précédentes, **caractérisée en ce que** au moins la lentille (14), le miroir (16) et la carte à circuits (15) sont agencés sur un tube (18).

6. Barrière lumineuse multifaisceaux selon l'une au moins des revendications précédentes 1 ou 3 á 5, **caractérisée en ce que** la déviation du faisceau par le miroir (16) est d'environ 180° et le miroir (16) est réalisé de façon sphérique.

7. Barrière lumineuse multifaisceaux selon l'une au moins des revendications précédentes 1 à 6 pour la détection d'objets (2) dans une zone à surveiller (3), comportant une unité de déviation (19),
comportant au moins un boîtier (4) ayant un axe longitudinal (5), la barrière lumineuse multifaisceaux (1) étant disposée dans ledit au moins un boîtier (4),
comportant au moins un miroir (16) agencé en tant qu'unité de déviation (19) pour les faisceaux lumineux d'émission (6) et pour les faisceaux lumineux de réception,
ladite unité de déviation (19) étant **caractérisée par** au moins un élément émetteur (8) émettant des faisceaux lumineux d'émission (6), et par au moins un élément récepteur (12) recevant des faisceaux lumineux de réception (10),
comportant chacun une lentille (14) qui est disposée en amont de l'élément émetteur (8) et/ou de l'élément récepteur (12),
dans laquelle l'élément émetteur (8) et l'élément récepteur (12) sont formés chacun par une extrémité d'un guide de lumière (20),
au moins un miroir (16) est agencé en tant qu'unité de déviation (19) pour les faisceaux lumineux d'émission (6) et pour les faisceaux lumineux de réception (10) à une distance en amont de l'élément émetteur (8) et/ou de l'élément récepteur (12),
le miroir (16) est agencé le long du chemin optique (21) entre la lentille (14) et l'élément émetteur (8) et entre la lentille (14) et l'élément récepteur (12).

8. Barrière lumineuse multifaisceaux selon la revendication 7, **caractérisée en ce que** au moins la lentille (14), le miroir (16) et une extrémité respective du guide de lumière (20) sont agencés sur un tube (18).
